Europäisches Patentamt

European Patent Office

Office européen des brevets

(11) Publication number: **0 518 690 B1**

# EUROPEAN PATENT SPECIFICATION

(45) Date of publication of patent specification: **26.07.95**  (51) Int. Cl.⁶: **D04H  1/42**

(21) Application number: **92305427.4**

(22) Date of filing: **12.06.92**

(54) **Needle punched carpet.**

(30) Priority: **13.06.91 JP 168776/91**

(43) Date of publication of application:
**16.12.92 Bulletin  92/51**

(45) Publication of the grant of the patent:
**26.07.95 Bulletin  95/30**

(84) Designated Contracting States:
**AT BE DE FR GB IT**

(56) References cited:
**US-A- 4 194 037**

**WORLD PATENTS INDEX Week 2974, Derwent
Publications Ltd., London, GB; AN 74-52608 &
JP-A-48091314**

**WORLD PATENTS INDEX LATEST Week 3982,
Derwent Publications Ltd., London, GB;
AN82-82315E & JP-A-57135021**

**WORLD PATENTS INDEX LATEST Week 3290,
Derwent Publications Ltd., London, GB; AN
90-243042 & JP-A-2169720**

**WORLD PATENTS INDEX LATEST Week 4991,
Derwent Publications Ltd., London, GB;
AN91-358554 & JP-A-3241012**

(73) Proprietor: **Chisso Corporation
6-32, Nakanoshima 3-chome
Kita-ku
Osaka-shi
Osaka-fu (JP)**

(72) Inventor: **Matsuda, Hideo
251, Tateiricho
Moriyama-shi,
Shiga-ken (JP)**
Inventor: **Sugawara. Shigeyuki
251, Tateiricho
Moriyama-shi,
Shiga-ken (JP)**
Inventor: **Yamanaka, Akira
1402,-5, Harimadacho
Moriyama-shi,
Shiga-ken (JP)**

(74) Representative: **Lamb, John Baxter et al
MARKS & CLERK,
57-60 Lincoln's Inn Fields
London WC2A 3LS (GB)**

**WORLD PATENTS INDEX LATEST Week 2790,
Derwent Publications Ltd., London, GB;
AN90-206850 & JP-A-2139465**

**WORLD PATENTS INDEX Week 2777, Derwent
Publications Ltd., London, GB; AN 77-47904Y
& JP-A-52063478**

**Description**

1. Field of the Invention

This invention relates to a carpet for indoor or outdoor covering or for vehicles. More particularly it relates to a needle punched carpet which needs no primary backing cloth, laminating materials or latexes, and is lightweight, economical and easily recycled after used.

2. Description of the Related Art

Heretofore, as carpet for covering the floor of exhibition halls, event halls, etc. (hereinafter called generally as exhibition carpets), those comprising a pile portion consisting of a needle punched non-woven fabric forming the surface layer, a primary backing cloth under the above pile portion and further a latex with which the back surface of the fabric is impregnated have been generally used, and a flame-retardant has often been added to the latex in order to impart flame-retardancy to the carpets.

As needle punched carpets for the floor of vehicles, those obtained by impregnating the back surface of the pile portion forming the surface layer with a latex and further laminating a sheet of a polyolefin or the like onto the pile portion have been generally used.

For the exhibition carpets or the floor carpets for vehicles, the following specifications have been required recently: 60 kg/5 cm or more for the exhibition carpet and 80 kg/5 cm or more for the floor carpets for vehicles.

Recently, requirements for economy and lightweight have been enhanced for both the needle punched carpets for exhibition and vehicles. Further, recently, as a countermeasure for preventing environmental pollution, problem of reuse of wastes has been raised, and in the field of carpets, too, research in reuse of used carpets has been started. As to the use period of the above carpets, that of the carpets for exhibitions is very short, that is, limited to the period of exhibitions, events, etc. in session and nevertheless, all of the carpets after used have been disposed as wastes. Therefore the reuse of the carpets is particularly desired. However, most of the current needle punched carpets are different between the stocks of the pile portion and another structural material, and further the respective materials have been tightly bonded. Thus, separation of the materials from each other desired for the reuse has been difficult.

As a method for meeting the above-mentioned requirements for the economy, lightweight and reuse, it may be thought of to omit the base fabrics, laminating materials or latexes as the structural materials for the carpets. However, to omit such structural materials is accompanied with reduction in the various properties of carpets such as the strength of carpets, the flame retardancy, etc.

SUMMARY OF THE INVENTION

The object of the present invention is to provide a needle punched carpet being superior in the economy and lightweight, easy in the recycling use and not accompanied with any deterioration in the physical properties of the carpets.

The present inventors have made extensive research in order to attain the above-mentioned object, and as a result, have found that when mixed fibers of polypropylene staple fibers with polypropylene hotmelt-adhesive conjugated staple fibers (hereinafter abbreviated to conjugated staple fibers) are needle-punched, followed by heat treatment to adhere and fix the contact points of the fibers by the lower melting component of the conjugated staple fibers, the above object can be achieved and the present invention could have been completed.

The present invention resides in a needle punched carpet obtained by needle-punching mixed fibers of 25 to 90% by weight of hotmelt-adhesive, conjugated staple fibers obtained by subjecting a first component of polypropylene and a second component of a copolymer and/or a terpolymer of olefins composed mainly of propylene having a melting point lower by 20°C or more, than that of said first component, to conjugate spinning in the form of side-by-side or sheath-and-core so that said second component can occupy the greater part of the fiber surface, with 75 to 10% by weight of polypropylene staple fibers, followed by heat-treating the resulting material at a temperature higher than the melting point of said second component and lower than the melting point of said first component.

DETAILED DESCRIPTION OF PREFERRED EMBODIMENTS

The present invention will be described in more detail.

The copolymer of olefins composed mainly of propylene referred to herein means a random copolymer of 85 to 99% by weight of propylene with 1 to 15% by weight of ethylene or a random copolymer of 50 to 99% by weight of propylene with 1 to 50% by weight of butene-1. Further, the terpolymer of olefins composed mainly of propylene referred to herein means a crystalline terpolymer of 84 to 97% by weight of propylene, 1 to 10% by weight of ethylene and 1 to 15% by weight of butene-1.

The above copolymer or terpolymer of olefins composed mainly of propylene refers to a polymer obtained by polymerizing propylene and ethylene, or propylene, ethylene and/or butene-1 so as to give the above-mentioned contents of the respective components, by using known Ziegler-Natta catalyst. The obtained polymer is essentially a random copolymer. As for a process of polymerization, besides that of polymerizing mixed gases of monomers from the beginning, that of polymerizing propylene to obtain a propylene homopolymer of 20% by weight or less of the total polymer, followed by feeding and polymerizing the mixed gases of the respective components, in order to improve the productivity, may be employed.

The ethylene content has a large influence upon the melting point and the butene-1 content has a large influence upon the melting point and the hotmelt-adhesivity. If either one of the contents of the comonomers (ethylene and butene-1) in the copolymer or the terpolymer is less than 1% by weight, the resulting hotmelt-adhesivity is insufficient. On the other hand, with increase in the contents of the comonomers, the melting point of the copolymer or terpolymer lowers and the hotmelt-adhesivity increases, but at the same time, the proportion of by-products, soluble in the polymerization solvent (hydrocarbon), formed at the time of polymerization increases to lower the productivity. Therefore, the contents of comonomers higher than the above-mentioned upper limit are undesirable to the commercial production.

Such copolymers and terpolymers may be each used alone as the second component of the conjugated staple fibers, but the copolymers and the terpolymers may also be employed in admixture.

The conjugated staple fibers used in the present invention are hotmelt-adhesive staple fibers obtained by subjecting the first component of polypropylene and the second component of the copolymer and/or the terpolymer of olefins composed mainly of propylene having a melting point lower by 20°C or more, than the melting point of the first component, to conjugate-spinning in the form of side-by-side or sheath-and-core so that the second component can occupy the greater part of the fiber surface.

Unless the melting point of the second component of the conjugated staple fibers is lower by 20°C or more, than the melting point of the first component, even the first component is softened or melted at the time of heat-treatment for melting the second component, so that the conjugated staple fibers lose the fiber shape and damage the appearance of the carpet product.

A process of subjecting the first component and the second component to conjugate spinning so that the second component can occupy the greater part of the fiber surface may be carried out by known conjugate spinning processes in the side-by-side form or sheath-and-core form. In the conjugate spinning in the sheath-and-core form, the second component is used as the sheath.

The fineness of the single fiber of the conjugated staple fibers is preferably 2 to 150 deniers, more preferably 4 to 100 deniers. The fineness of the single fiber of polypropylene used for the needle punched carpet is usually 2 to 150 deniers. Therefore, if the fineness of the single fiber of the conjugated staple fibers is less than 2 deniers, the mixed state of the conjugated staple fibers becomes uneven or neps occur at the carding step after mixing. Further, if the fineness of the single fiber of the conjugated staple fibers exceeds 150 deniers, the number of the adhesion points between the fibers due to the melt-adhesion of the conjugated staple fibers is reduced. Thus, since the reticulated structure in the carpet pile becomes rough, the tensile strength and the tear strength of the carpet become insufficient.

In order to give a desired color to the carpet, pigments may be added to either one or both of the first component and the second component, followed by the so-called dope dyeing spinning to obtain dope dyed conjugated staple fibers. Further, flame retardancy on a definite level is required for most of carpets. In order to satisfy this requirement, a necessary quantity of flame-retardants may be added to the second component of the conjugated staple fibers. When the flame-retardant is added to the second component, it is possible to obtain a sufficient effectiveness in a smaller quantity thereof than that added to the whole of the fibers. Further, in the case of the dope dyed conjugated staple fibers, a flame-retardant may also be added to the second component, if necessary.

As the polypropylene staple fibers used in the present invention, the staple fibers obtained by melt-spinning a crystalline polypropylene which is essentially a propylene homopolymer, and having a fineness of the single fiber of 2 to 150 deniers are usable. The ratio of the finenesses of single fibers of the conjugated staple fibers to that of the polypropylene staple fibers in the mixed fibers has no particular limitation, but it is preferably 1/2 to 1/10 in the aspect of suitable physical properties of carpet.

In the present invention, the conjugated staple fibers comprising the first component and the second component are blended with the polypropylene staple fibers. As the process for blending both the fibers, known processes such as air-laying process, carding process, etc. may be employed. The quantity of the conjugated staple fibers in the mixed fibers is 25 to 90% by weight, preferably 30 to 80% by weight, more preferably 40 to 70% by weight. If the quantity of the conjugated staple fibers in the mixed fibers is less than 25% by weight, the number of the adhesion points between the fibers due to melt adhesion of the conjugated staple fibers is reduced. Thus, since the reticulated structure in the carpet pile becomes rough, the tensile strength of the carpet is insufficient. Further, stripping-off of fibers and tangling of fluffed fibers from the pile portion occur during the use of the carpet to damage the appearance of the carpet.

On the other hand, with increase of the quantity of the conjugated staple fibers in the mixed fibers, the web has a tendency of being elongated in the width direction by needle-punching, the shrinkage after heat-treatment of the web becomes large and hence is deficient in the dimensional stability. If the quantity of the conjugated staple fibers exceeds 90% by weight, the resulting web becomes notably susceptible to the above effect, and it is difficult to satisfy the current specifications of the tensile strength (B.I.) of carpets for exhibition (60 kg/5 cm or higher). Further, the abrasion strength required to the characteristics of the carpet is reduced, and on the surface after abrasion tangling of fluffed fibers are observed causing reduction of the quality.

In the present invention, the above-mentioned mixed fibers web are needle-punched according to a known needle-punching process, followed by heat-treating the resulting material at a temperature of the melting point or higher of the second component of the conjugated staple fibers and lower than the melting point of the first component thereof, to obtain a carpet having a tensile strength (B.I.) of 60 kg/5 cm or higher. In order to impart a desired tensile strength to the carpet, the basis weight of the carpet is made 300 g/cm$^2$ or more, and the temperature and the time of the heat-treatment are determined by way of a trial and error method, taking into account the melting point of the second component of the conjugated staple fibers.

The needle punched carpet of the present invention has a tensile strength of 60 kg/5 cm or higher, and besides, it has an abrasion strength of 300 mg or less and holds a quality of the third grade or higher in terms of the surface appearance after abrasion.

The copolymer and/or terpolymer of olefins composed mainly of propylene, used as the first component in the present invention, has a very high affinity to the second component, and even in the case of the conjugated structure of side-by-side, the two components are hard to be peeled off from each other. Thus, in the case of the carpets of conjugated fibers, made of conjugated fibers composed of usual polyethylene and polypropylene, a problem of so-called chalk mark occurs, but such a mark does not occur in the case of the carpet of the conjugate staple fibers of the present invention.

Further, as the conjugated fibers used in this invention are superior in hotmelt adhesivity, the conjugated fibers hotmelt-adhered in a state retaining the fiber shape at the time of heat treatment after mixed with the polypropylene staple fibers, so the mixed fibers in the carpet form a three-dimensional, reticulated structure.

The present invention will be described in more detail by way of Examples and Comparative examples. In the examples, the evaluations of carpets were carried out according to the following methods:

Carpet thickness:      According to JIS L1021 (Testing Methods for Textile Floorcoverings), item 6.4.1.

Measuring conditions:

| | |
|---|---|
| pressure head area | 20 cm$^2$ |
| pressing time | 10 sec. |
| applied pressure | 40 gf/cm$^2$ |

Tensile strength:      The tensile strength value (Bondability Index) refers to the geometric average of longitudinal strength and lateral strength, and was calculated using the following equation:

$$\text{Tensile strength (B.I.)} = \sqrt{(\text{longitudinal strength} \times \text{lateral strength})}$$

Measuring conditions:      According to JIS L1021, item 6.9.1.

| Test piece width | 5 cm |
|---|---|
| Gripping distance | 20 cm |
| Tensile rate | 10 cm/min |

The strengths in the longitudinal direction and in the lateral direction are measured.

Abrasion strength: According to JIS L1021, item 6.12.

Measuring conditions:

| Abrasion wheel | H-38 |
|---|---|
| Load | 1 kg |
| Number of times of abrasion | 1,000 revolution |

(Note) The abrasion strength was expressed in terms of the weight (mg) of fibers having dropped by abrasion.

Surface appearance after abrasion test:

The evaluation of the surface appearance after abrasion test was carried out by five grades evaluation by naked eye observation, and third grade to the fifth grade were regarded as "acceptable".

The evaluation standards were as follows:

Fifth grade: abrasion surface is flat and fiber fluffing is not observed.

Forth grade: Fluffs having a fiber length of 1 mm or less are observed.

Third grade: Fluffs having a fiber length of 2 to 4 mm or occurrence of tuft are observed.

Second grade: Fluffs having a fiber length of 5 to 9 mm or occurrence of tuft are observed.

First grade: Fluffs having a fiber length of 10 mm or more or occurrence of tuft are observed.

Flame retardancy: 45° air mix burner method, defined in the Fire Services Act Practice Rule, Article 4-3.

Evaluation of applicability to recycle:

The evaluation of applicability to recycle was carried out under the judgement standards directed to processability of regenerating pellets as described below. The processing steps of the regenerating pellets are carried out as follows:

(1) A carpet is fed to a shredder and ground into small pieces having an average size of 3 to 5 mm. The ground small pieces are extruded in the form of molten strands by means of an extruder provided with a vent.

(2) The extruded strands in molten state are cooled in a water bath.

(3) The cooled and solidified strands are cut into granular form by means of a pelletizer to obtain a regenerated pellets.

The judgement standards of applicability to the regeneration are as follows:

○: The steps (1) to (3) can be throughout carried out.

△: At the step (1), breakage of the molten strands extruded from the extruder occur sometimes.

X: At the step (1), breakage of the molten strands extruded from the extruder occur flequently.

In addition, as the flame-retardant in the examples, a mixture of decabromodiphenyl ether with antimony trioxide (ratio by weight: 2:1) was used.

Example 1

Mixed fibers of 25% by weight of sheath-and-core, conjugated staple fibers (fiber length: 64 mm, single fiber fineness: 5 d) in a conjugation ratio of 50/50, consisting of as a sheath component, a terpolymer (m.p.: 130°C) consisting of 92% by weight of propylene, 3.5% by weight of ethylene and 4.5% by weight of butene and having added 10% weight of the flame-retardant, and as a core component, a crystalline polypropylene (m.p.: 160°C), with 75% by weight of polypropylene staple fibers (fiber length: 64 mm, single fiber fineness: 18 d), were made up into a web having a basis weight of about 440 g/m$^2$ by means of a carding machine, followed by needle punching by means of a felt needle of Count No. 30 and at a needling density of 400 needles/cm$^2$, to obtain a raw fabric of carpet.

6

This raw fabric of carpet was heated by means of a suction band dryer at a hot air temperature of 135°C for 12 minutes, and allowed to stand at room temperature for cooling.

The resulting carpet, prepared as a trial on the model of a carpet for exhibition, had a strength of 60 kg/5 cm or higher without using any primary backing cloth, and exhibited a superior flame retardancy without using any latex. Further, the surface appearance of the carpet after measurement of abrasion strength corresponded to the third grade, that is, was practically usable.

At the processing step of the regenerating pellets, pelletization was possible without any trouble, and the applicability to recycle was good.

Example 2

Mixed fibers of 50% by weight of sheath-and-core, conjugated staple fibers (fiber length: 64 mm, single fiber fineness: 5 d) in a conjugation ratio of 50/50, consisting of as a sheath component, a terpolymer (m.p.: 130°C) consisting of 92% by weight of propylene, 3.5% by weight of ethylene and 4.5% by weight of butene-1 and having added 10% by weight of the flame-retardant, and as a core component, a crystalline polypropylene (m.p.: 160°C), with 50% by weight of polypropylene staple fibers (fiber length: 64 mm, single fiber fineness: 18 d), were made up into a web having a basis weight of about 440 g/m$^2$ by means of a carding machine, followed by needle punching by means of a felt needle of Count No. 30 and at a needling density of 400 needles/cm$^2$, to obtain a raw fabric of carpet.

This raw fabric of carpet was heated by means of a suction band dryer at a hot air temperature of 135°C for 12 minutes, and allowed to stand at room temperature for cooling.

The resulting carpet, prepared as a trial on the model of a carpet for exhibition, had a strength of 60 kg/5 cm or higher without using any primary backing cloth, and exhibited a superior flame retardancy without using any latex. Further, the surface appearance of the carpet after measurement of abrasion strength corresponded to about the fifth grade, that is, was very good.

At the processing step of the regenerating pellets, pelletization was possible without any trouble, and the applicability to recycle was good.

Example 3

Mixed fibers of 75% by weight of sheath-and-core, conjugated staple fibers (fiber length: 64 mm, single fiber fineness: 5 d) in a conjugation ratio of 50/50, consisting of as a sheath component, a terpolymer (m.p.: 130°C) consisting of 92% by weight of propylene, 3.5% by weight of ethylene and 4.5% by weight of butene-1 and having added 10% by weight of the flame-retardant, and as a core component, a crystalline polypropylene (m.p.: 160°C), with 25% by weight of polypropylene staple fibers (fiber length: 64 mm, single fiber fineness: 18 d), were made up into a web having a basis weight of about 440 g/m$^2$ by means of a carding machine, followed by needle punching by means of a felt needle of Count No. 30 and at a needling density of 400 needles/cm$^2$, to obtain a raw fabric of carpet.

This raw fabric of carpet was heated by means of a suction band dryer at a hot air temperature of 135°C for 12 minutes, and allowed to stand at room temperature for cooling.

The resulting carpet, prepared as a trial on the model of a carpet for exhibition, had a strength of 60 kg/5 cm or higher without using any primary backing cloth, and exhibited a superior flame retardancy without using any latex. Further, the surface appearance of the carpet after measurement of abrasion strength corresponded to about the forth grade, that is, was very good.

At the processing step of the regenerating pellets, pelletization was possible without any trouble, and the applicability to recycle was good.

Example 4

Mixed fibers of 90% by weight of sheath-and-core, conjugated staple fibers (fiber length: 64 mm, single fiber fineness: 5 d) in a conjugation ratio of 50/50, consisting of as a sheath component, a terpolymer (m.p.: 130°C) consisting of 92% by weight of propylene, 3.5% by weight of ethylene and 4.5% by weight of butene-1 and having added 10% by weight of the flame-retardant, and as a core component, a crystalline polypropylene (m.p.: 160°C), with 10% by weight of polypropylene staple fibers (fiber length: 64 mm, single fiber fineness: 18 d), were made up into a web having a basis weight of about 440 g/m$^2$ by means of a carding machine, followed by needle punching by means of a felt needle of Count No. 30 and at a needling density of 400 needles/cm$^2$, to obtain a raw fabric of carpet.

This raw fabric of carpet was heated by means of a suction band dryer at a hot air temperature of 135°C for 12 minutes, and allowed to stand at room temperature for cooling.

The resulting carpet, prepared as a trial on the model of a carpet for exhibition, had a strength of 60 kg/5 cm or higher without using any primary backing cloth, and exhibited a superior flame retardancy without using any latex. Further, the surface appearance of the carpet after measurement of abrasion strength corresponded to about the third grade, that is, was practically usable.

At the processing step of the regenerating pellets, pelletization was possible without any trouble, and the applicability to recycle was good.

Example 5

Mixed fibers of 50% by weight of sheath-and-core, conjugated staple fibers (fiber length: 64 mm, single fiber fineness: 5 d) in a conjugation ratio of 50/50, consisting of as a sheath component, a copolymer (m.p.: 139°C) consisting of 96.1% by weight of propylene and 3.9% by weight of ethylene, and having added the flame-retardant, and as a core component, a crystalline polypropylene (m.p.: 160°C), with 50% by weight of polypropylene staple fibers (fiber length: 64 mm, single fiber fineness: 18 d), were made up into a web having a basis weight of about 440 g/m$^2$ by means of a carding machine, followed by needle punching by means of a felt needle of Count No. 30 and at a needling density of 400 needles/cm$^2$, to obtain a raw fabric of carpet.

This raw fabric of carpet was heated by means of a suction band dryer at a hot air temperature of 135°C for 12 minutes, and allowed to stand at room temperature for cooling.

The resulting carpet, prepared as a trial on the model of a carpet for exhibition, had a strength of 60 kg/5 cm or higher without using any primary backing cloth, and exhibited a superior flame retardancy without using any latex. Further, the surface appearance of the carpet after measurement of abrasion strength corresponded to about the fifth grade, that is, was very good.

At the processing step of the regenerating pellets, pelletization was possible without any trouble, and the applicability to recycle was good.

Comparative example 1

Sheath-and-core conjugated staple fibers (fiber length: 64 mm, single fiber fineness: 5 d) in a conjugation ratio of 50/50, consisting of as a sheath component, a terpolymer (m.p.: 130°C) consisting of 92% by weight of propylene, 3.5% by weight of ethylene and 4.5% by weight of butene-1, and having added 10% by weight of the flame-retardant, and as a core component, a crystalline polypropylene (m.p.: 160°C) were made up into a web having a basis weight of about 440 g/m$^2$ by means of a carding machine, followed by needle punching by means of a felt needle of Count No. 30 and at a needling density of 400 needles/cm$^2$, to obtain a raw fabric of carpet. This raw fabric consisting of 100% of sheath-and-core, conjugated staple fibers had a tendency to elongate in the width direction during the needle punching, and the basis weight of the raw fabric of carpet after processed was reduced from about 440 g/m$^2$ of the basis weight before the processing down to about 390 g/m$^2$. Thus, the obtained raw fabric was deficient in the dimensional stability.

This raw fabric of carpet was heated by means of a suction band dryer at a hot air temperature of 135°C for 12 minutes, and allowed to stand at room temperature for cooling.

The resulting carpet, prepared as a trial on the model of a carpet for exhibition, had a strength lower than 60 kg/5 cm, that is, the strength was insufficient.

The surface appearance of carpet after measurement of abrasion strength corresponded to about the first grade to the second grade, and the fluffing of fibers on the carpet was notable.

At the processing step of the regenerating pellets, pelletization was possible without any trouble, and the applicability to recycle was good.

Comparative example 2

Mixed fibers of 20% by weight of sheath-and-core, conjugated staple fibers (fiber length: 64 mm, single fiber fineness: 5 d) in a conjugation ratio of 50/50, consisting of as a sheath component, a terpolymer (m.p.: 130°C) consisting of 92% by weight of propylene, 3.5% by weight of ethylene and 4.5% by weight of butene-1, and having added the flame-retardant, and as a core component, a crystalline polypropylene (m.p.: 160°C), with 80% by weight of polypropylene staple fibers (fiber length: 64 mm, single fiber fineness: 18 d), were made up into a web having a basis weight of about 440 g/m$^2$ by means of a carding machine, followed by needle punching by means of a felt needle of Count No. 30 and at a needling density of 400 needles/cm$^2$, to obtain a raw fabric of carpet.

This raw fabric of carpet was heated by means of a suction band dryer at a hot air temperature of 135°C for 12 minutes, and allowed to stand at room temperature for cooling.

The resulting carpet, prepared as a trial on the model of a carpet for exhibition, had a strength lower than 60 kg/5 cm, which was insufficient.

The surface appearance of carpet after measurement of abrasion strength corresponded to about the second grade, and the fluffing of fibers on the carpet was notable.

At the processing step of the regenerating pellets, pelletization was possible without any trouble, and the applicability to recycle was good.

Comparative example 3

Mixed fibers of 50% by weight of sheath-and-core, conjugated staple fibers (fiber length: 64 mm, single fiber fineness: 5 d) in a conjugation ratio of 50/50, consisting of as a sheath component, a high density polyethylene (m.p.: 130°C) and as a core component, a crystalline polypropylene (m.p.: 160°C), and having added 10% by weight of the flame-retardant, with 50% by weight of polypropylene staple fibers (fiber length: 64 mm, single fiber fineness: 18 d), were made up into a web having a basis weight of about 440 g/m$^2$, by means of a carding machine, followed by needle punching by means of a felt needle of Count No. 30 and at a needling density of 400 needles/cm$^2$, to obtain a raw fabric of carpet.

This raw fabric of carpet was heated by a suction band dryer at a hot air temperature of 135°C for 12 minutes, and allowed to stand at room temperature for cooling.

The resulting carpet, prepared as a trial on the model of a carpet for exhibition, which was prepared under the same conditions as in Example 2 except that a high density polyethylene was used as the sheath component as described above, but the tensile strength of the carpet was lower than 60 kg/5 cm, that is, the strength was insufficient. The reason is considered to be in that adhesion between fibers was made only between conjugated fibers, and therefore the density of the reticulated structure was low.

The surface appearance of carpet after measurement of abrasion strength corresponded to about the second grade and the fluffing of fibers on the carpet was notable.

At the processing step of the regenerating pellets, since the compatibility of the high density polyethylene with polypropylene was inferior, there was observed a phenomenon that the molten strand extruded from the extruder broke many times, thus the applicability to recycle was somewhat inferior.

Comparative example 4

Polypropylene staple fibers (fiber length: 64 mm, single fiber fineness: 18 d) were made up into a web having a basis weight of 220 g/m$^2$, by means of a carding machine, followed by laying the web on a primary backing cloth of a polyester spun bond having a basis weight of 100 g/m$^2$ and needle-punching the resulting material under the same conditions as in Example 1, to obtain a raw fabric of carpet. This raw fabric of carpet was impregnated with a latex in a quantity of 100 g/m$^2$, on the primary backing cloth side of the raw fabric of carpet, to obtain a carpet.

This Comparative example 4 corresponds to a model of conventional needle punched carpet using a primary backing cloth and a latex. While the basis weight of the pile part is 220 g/m$^2$, the total basis weight of the whole carpet including those of the primary backing cloth and the latex amounts to 420 g/m$^2$ which is almost the same as the basis weight of the carpet of the Examples.

The surface appearance of a carpet after measurement of abrasion strength corresponded to about the fourth grade, that is, was superior. However, at the processing step of the regenerating pellets, the molten strand extruded from the extruder broke frequently and pelletization was impossible. Thus, the applicability to recycle was inferior.

Various data of needle punched carpets of Examples and Comparative examples are shown in Table 1.

Table 1

Various data of needle punched carpet

| | | Example 1 | Example 2 | Example 3 | Example 4 | Example 5 | Comp.ex. 1 | Comp.ex. 2 | Comp.ex. 3 | Comp.ex. 4 |
|---|---|---|---|---|---|---|---|---|---|---|
| Composition of conjugated fibers | Core component | PP | PP | PP | PP | PP | PP | PP | PP | |
| | Sheath component | Terpolymer | Terpolymer | Terpolymer | Terpolymer | Copolymer | Terpolymer | Terpolymer | HDPE | |
| Fineness of conjugated fibers (d/f) | | 5 | 5 | 5 | 5 | 5 | 5 | 5 | 5 | |
| Mixing proposition (%) of conjugated fibers | | 25 | 50 | 75 | 90 | 50 | 100 | 20 | 50 | |
| Weight of carpet (g/m²) | | 429 | 425 | 419 | 402 | 422 | 391 | 435 | 415 | 420 |
| Thickness of carpet (mm) | | 4.3 | 4.1 | 4.2 | 4.0 | 4.2 | 3.9 | 4.4 | 4.1 | 3.2 |
| Tensile strength BI (kg/5cm) | | 67.9 | 65.2 | 70.4 | 66.0 | 71.8 | 52.2 | 35.3 | 49.6 | 87.6 |
| Adhesion strength (mg) | | 264.1 | 226.8 | 219.4 | 252.7 | 242.2 | 533.9 | 279.1 | 311.2 | 78.2 |
| Surface appearance | | 3rd grade | 5th grade | 4th grade | 3rd grade | 5th grade | 1st-2nd grade | 2nd grade | 2nd grade | 4th grade |
| Flame retardancy afterflame time (sec) | Longitudinal | 0.0 | 0.0 | 0.0 | 0.0 | 0.0 | 0.0 | 13.1 | 0.0 | 0.0 |
| | Lateral | 0.0 | 0.0 | 0.0 | 0.0 | 0.0 | 0.0 | 33.4 | 17.7 | 0.0 |
| Evaluation of applicability to recycle | | ○ | ○ | ○ | ○ | ○ | ○ | ○ | △ | × |

※ Dope dyed, polypropylene staple fibers for mixing: 18 d × 64 mm

The fundamental idea of the present invention consists in that when mixed staple fibers of polypropylene staple fibers with conjugated staple fibers are needle-punched, followed by heat treatment to form a three-dimensional, reticulated structure due to melt-adhesion of fibers between each other in the resulting carpet pile, then the strength of the carpet pile is improved and a sufficient carpet strength is exhibited even without using primary backing cloth, laminating material or latex. A process for improving the strength of non-woven fabric by forming a reticulated structure due to melt-adhesion of fibers has already been carried out, but by merely forming a reticulated structure of conjugated staple fibers, a carpet strength enough to satisfy the specifications of carpet could not have been obtained.

The characteristics of the present invention consist in that the reticulated structure is not only formed between conjugated staple fibers, but also between conjugated staple fibers and non-conjugated staple fibers three-dimensionally.

Namely, when the lower melting component of conjugated staple fibers contributing to the formation of the reticulated structure by melt fusion, and the staple fibers to be mixed with the above conjugated staple fibers, are unified so as to be of polypropylene resin, then strong-adhesion points are formed not only between conjugated staple fibers, but also even between conjugated staple fibers and non-conjugated staple fibers; thus three-dimensionally reticulated structures in the carpet are obtained with a higher density. Thereby, a high pile strength which could not have been obtained by a reticulated structure formed only between conjugated staple fibers, has been obtained, and also a carpet strength enough to satisfy the specifications has been obtained even without using any primary backing cloth, laminating material or latex.

Further, the carpet is also superior in the abrasion strength and the surface appearance after abrasion, regarded as an index of appearance and quality of carpet.

In the carpet of the present invention, all of the thermoplastic resin components constituting the carpet are unified to polypropylene resins. Since polypropylene has not tendency of hydrolysis at the time of thermal fusion and also its thermal degradation is small under conventional processing temperature condition, it is one of resins optimal to recycling process. Thus, the carpet according to the present invention has a superior applicability to recycle.

Carpets requires a flame retardancy on a definite level. Thus, a flame-retardant has so far been added to latexes. Whereas, in the present invention, when a required quantity of a flame-retardant is added to the second component of the conjugated staple fibers, a flame retardancy is imparted to the carpet, it is possible to substitute the flame retardancy of the second component for that of latex.

In the present invention, since a base fabric, laminating material or latex is not used in the needle punched carpet, tee following advantages are obtained:

(1) The production steps are simplified, and

(2) in the carpet for exhibition, since no base fabric is used, it has become possible to use needling process for patterning, and a high-level needle punching process having superior surface-design properties such as code tone, diroa tone, etc. has become applicable.

## Claims

1. A needle punched carpet obtained by needle-punching mixed fibers of 25 to 90% by weight of hotmelt-adhesive, conjugated staple fibers obtained by subjecting a first component of polypropylene and a second component of a copolymer and/or a terpolymer of olefins composed mainly of propylene having a melting point lower by 20°C or more than that of said first component, to conjugate spinning in the form of side-by-side or sheath-and-core so that said second component can occupy the greater part of the fiber surface, with 75 to 10% by weight of polypropylene staple fibers, followed by heat-treating the resulting material at a temperature of the melting point or higher of said second component and lower than the melting point of said first component.

2. A needle punched carpet according to claim 1, wherein said conjugated staple fibers are dope dyed conjugated staple fibers having a pigment added to either one or both of said first component and said second component.

3. A needle punched carpet according to claim 1, wherein said conjugated staple fibers are flame-retardant conjugated staple fibers having a flame-retardant added to said second component.

4. A needle punched carpet according to claim 2, wherein said dope dyed conjugated staple fibers are dope dyed, flame-retardant, conjugated staple fibers having a flame-retardant added to said second component.

**Patentansprüche**

1. Nadelfilz-Bodenbelag, der gewonnen wird durch das Nadeln eines Fasergemischs aus 25 bis 90 Gew.-% von schmelzkleber-konjugierten Stapelfasern, die dadurch gewonnen werden, daß eine erste Komponente aus Polypropylen und eine zweite Komponente aus einem Copolymer und/oder einem Terpolymer von Olefinen, das hauptsächlich aus Propylen mit einem Schmelzpunkt besteht, der um 20° C oder mehr unter dem der ersten Komponente liegt, einem Kojugations-Spinnvorgang in Form von nebeneinander liegenden oder Hülle und Kern bildenden Komponenten auf eine Weise unterzogen werden, daß die zweite Komponente den größeren Teil der Faseroberfläche einnehmen kann, und aus 75 bis 10 Gew.-% Polypropylen-Stapelfasern, gefolgt von der Wärmebehandlung des resultierenden Materials bei einer Temperatur, die gleich dem oder höher als der Schmelzpunkt der zweiten Komponente und niedriger als der Schmelzpunkt der ersten Komponente ist.

2. Nadelfilz-Bodenbelag nach Anspruch 1, bei dem die Bikomponenten-Stapelfasern spinngefärbte Bikomponenten-Stapelfasern sind, wobei entweder einer oder beiden der ersten Komponente und der zweiten Komponente ein Pigment zugesetzt wurde.

3. Nadelfilz-Bodenbelag nach Anspruch 1, bei dem die Bikomponenten-Stapelfasern flammenhemmende Bikomponenten-Stapelfasern sind, wobei der zweiten Komponente ein Flammenhemmstoff zugesetzt wurde.

4. Nadelfilz-Bodenbelag nach Anspruch 2, bei dem die spinngefärbten Bikomponenten-Stapelfasern spinngefärbte, flammenhemmende Bikomponenten-Stapelfasern sind, wobei der zweiten Komponente ein Flammenhemmstoff zugesetzt wurde.

**Revendications**

1. Tapis aiguilleté produit par aiguilletage de fibres mélangées avec 25 à 90% en poids d'un adhésif fusible, de fibres coupées conjuguées produites en soumettant un premier composant de polypropylène et un deuxième composant d'un copolymère et/ou d'un terpolymère d'oléfines composé pour l'essentiel de polypropylène ayant un point de fusion inférieur de 20°C ou plus à celui dudit premier composant, pour filer de façon conjuguée côte à côte ou du type noyau-gaine, de manière que le deuxième composant puisse occuper la plus grande partie de la surface de la fibre, avec 75 à 10% en poids de fibres coupées de polypropylène, suivi par un traitement thermique du matériau résultant à une température correspondant au point de fusion dudit deuxième composant ou supérieure à celui-ci et inférieure au point de fusion dudit premier composant.

2. Tapis aiguilleté selon la revendication 1, dans lequel lesdites fibres coupées conjuguées sont des fibres coupées conjuguées colorées dans la masse comportant un pigment ajouté à l'un des premier ou deuxième composants ou à ces deux composants.

3. Tapis aiguilleté selon la revendication 1, dans lequel lesdites fibres coupées conjuguées sont des fibres coupées conjuguées ignifuges, comportant un agent ignifuge qui est ajouté audit deuxième composant.

4. Tapis aiguilleté selon la revendication 2, dans lequel lesdites fibres coupées conjuguées colorées dans la masse sont des fibres coupées conjuguées colorées dans la masse, ignifuges, comportant un agent ignifuge qui est ajouté audit deuxième composant.